# EUROPEAN PATENT APPLICATION

(11) **EP 2 009 303 A2**
(43) Date of publication of application: **31.12.2008**
(21) Application number: 08011488.7
(22) Date of filing: 24.06.2008
(51) Int. Cl.: F16D 3/04

(54) **Power transmission device**

(30) Priority: 25.06.2007 JP 2007166477
(71) Applicant: AISIN AI Co., Ltd., Nishio-shi, Aichi-ken (JP)
(72) Inventor: Shionoya, Susumu, Nishio-shi, Aichi-ken (JP); Miyazaki, Takeshiga, Nishio-shi, Aichi-ken (JP); Ueda, Yukio, Nishio-shi, Aichi-ken (JP)
(74) Representative: Marshall, John Grahame

(57) **Abstract**

A power transmission device (1) includes a first shaft (2), a second shaft (3), and a connecting member (4/4') for axially connecting the first shaft (2) and the second shaft (3) and transmitting a rotational power therebetween, wherein the connecting member (4/4') includes a first shaft connecting portion (41) connected to one end portion (21) of the first shaft (2) with forming a predetermined first clearance (51) in a reference direction, and a second shaft connecting portion (42/43) connected to one end portion (31) of the second shaft (3) with forming a predetermined second clearance (52) ixt a cross direction, the first shaft (2) is connected to the first shaft connecting portion (41) and the second shaft (3) is connected to the second shaft connecting portion (42/43), thereby engaging the first shaft (2) and the second shaft (3) in a rotational direction via the connecting member (4/4').

## Description

### FIELD OF THE INVENTION

The present invention relates to a power transmission device for transmitting power between two shafts

### BACKGROUND

As a method of transmitting a rotational power between two shafts, the two shafts are arranged coaxially, and an end portion of each of the two shafts is connected with each other so as to be engaged in a rotational direction. In such the method of connecting two shafts, if the two shafts are connected in a state where axes of the two shafts are misaligned, the power is not sufficiently transmitted between the two shafts, and further, the connecting state between the two shafts may be canceled or a joint portion between the two shafts may be damaged. Hence, in the connection of two shafts, a mechanism for absorbing shaft misalignment is employed.

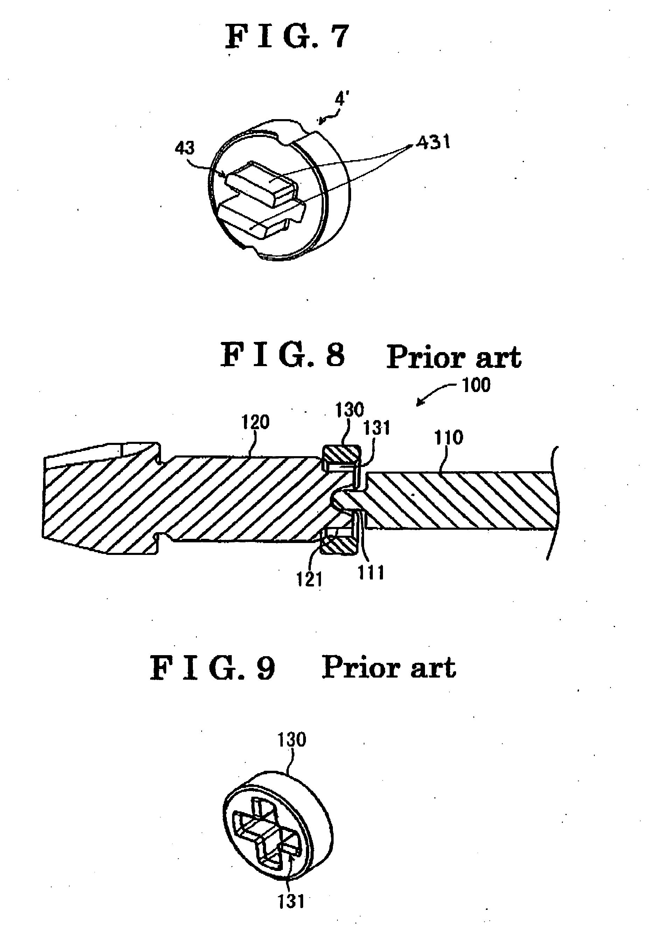

For example, as illustrated in Fig. 8, a conventional power transmission device 100 includes a connecting member 130 for absorbing the shaft misalignment at a joint portion between an input shaft 110 and an output shaft 120.

As illustrated in Fig. 9, an outer shape of the connecting member 130 is formed substantially in a cylindrical shape. The connecting member 130 is formed to have an opening portion 131 in a crisscross shape at an inner portion thereof when the connecting member 130 is viewed in an axial direction thereof.

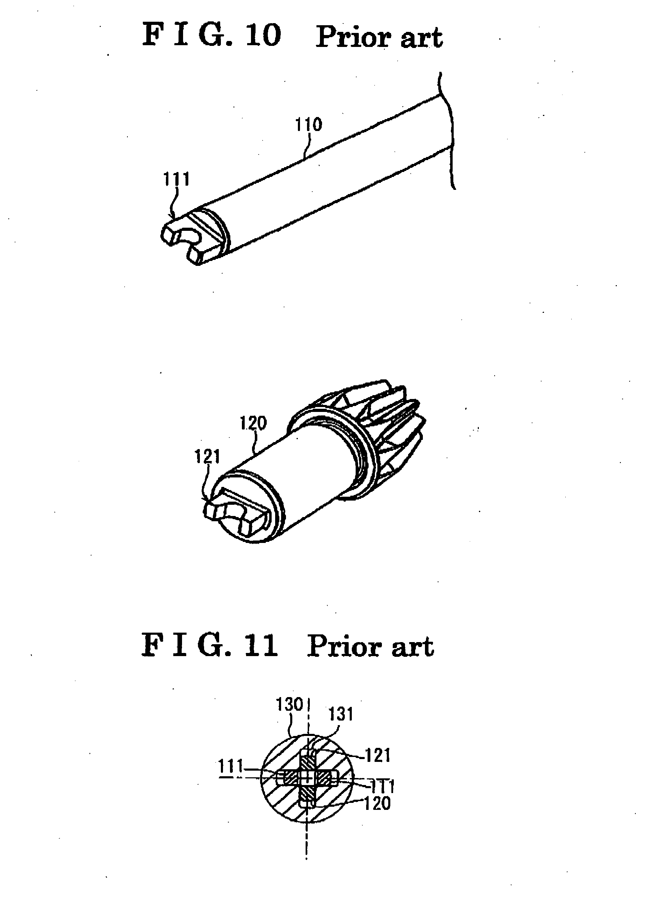

As illustrated in Fig. 10, a first connecting portion 111, which is inserted into the opening portion 131, is formed at one end portion of the input shaft 110. A second connecting portion 121, which is inserted into the opening portion 131, is formed at one end portion of he output shaft 120. Each of the first and second connecting portions 111 and 121 is formed to have a plate-shape having a U-shaped cut-out. The U-shaped cut-out is formed at end portion of each of the first and the second connecting portions 111 and 121.

The first connecting portion 111 of the input shaft 110 is inserted into the opening portion 131 from one side of the connecting member 130 in the axial direction thereof. The second connecting portion 121 of the output shaft 120 is inserted into the opening portion 131 from the other side of the connecting member 130 in the axial direction thereof. The first and second connecting portions 111 and 121 are engaged with each other, so that the first and the second connecting portions 111 and 121 are retained at the opening portion 131 in a state where the first and the second connecting portions 111 and 121 form a right angle.

As illustrated in Fig. 11, each of the first and second connecting portions 111 and 121 is formed to have a thickness approximately corresponding to the short side of the crisscross opening portion 130, so that the first and second connecting portions 111 and 121 are inserted to the opening portion 131 without creating clearance therebetween. Hence, the first and second connecting portions 111 and 121 do not clash against the opening portion 131 when the input shaft 110 and the output shaft 120 are rotated in the rotational direction. As a result, noise (operating noise) generated by a clash between the first and second connecting portions 111, 121 and the opening portion 131 of the connecting portion 130 is less likely to be generated. A length of each of the first and second connecting portions 111 and 121 in a longitudinal direction thereof is set so that an appropriate clearance (first and second clearance) is generated between each of the first and second connecting portions 111, 121 and an inner wall of the opening portion 131. The connecting portion 130 absorbs the misalignment in any directions between the input shaft 110 and the output shaft 120, because the first clearance and the second clearance are formed so as to orthogonal to each other.

However, in the conventional power transmission device 100, the input shaft 110 and the output shaft 120 may be connected without the connecting member 130, which may cause misassembling of the power transmission device 100. Each end portion of the first and the second connecting portions 111 and 121 is formed to have the U-shaped cut-out. The input shaft 110 and the output shaft 120 are connected at the U-shaped cut-outs thereof. Hence, even in a case where the input shaft 110 and the output shaft 120 are connected with each other without the connecting member 130, some of the rotational power is transmissible between the input shaft 110 and the output shaft 120.

Further, in order to form the U-shaped cut-out at each of the first and second connecting portions 111 and 121, each end portion of the input shaft 110 and the output shaft 120 needs to be cut in a plate-shape in a cutting process and the like, then the plate-shaped protruding portion of each of the input shaft 110 and the output shaft 120 needs to be cut to have a U-shaped cut-out separately. Hence, the process of forming each of the first and the second connecting portions 111 and 121 having the U-shaped cut-out is complicated.

A need thus exists to provide a power transmission device that absorbs shaft misalignment between two connected shafts and that is achievable in a fewer processes and at lower manufacturing costs.

### SUMMARY OF THE INVENTION

According to an aspect of the present invention, a power transmission device, includes a first shaft, a second shaft and a connecting member for axially connecting the first shaft and the second shaft and transmitting a rotational power between the first shaft and the second shaft, wherein the connecting member includes a first shaft connecting portion connected to one end portion of the first shaft with forming a predetermined first clearance between the one end portion of the first shaft and the first shaft connecting portion in a reference direction corresponding to one of radial directions of the first shaft and the second shaft, and a second shaft connecting portion connected to one end portion of the second shaft with forming a predetermined second clearance between the one end portion of the second shaft and the second shaft connecting portion in a cross direction crossing with the reference direction, one of the one end portion of the first shaft and the first shaft connecting portion, and one of the one end portion of the second shaft and the second shaft connecting portion are formed to have protruding portions protruding in the axial directions of the first shaft and the second shaft, respectively, the other one of the one end portion of the first shaft and the first shaft connecting portion, and the other one of the one end portion of the second shaft and the second shaft connecting portion are formed to have recessed portions, respectively, so that the one end portion of the first shaft is connected to the first shaft connecting portion and the one end portion of the second shaft is connected to the second shaft connecting portion, thereby engaging the first shaft and the second shaft in a rotational direction via the connecting member.

According to another aspect of the present invention, the reference direction extends in parallel to one side of the second shaft connecting portion, and the cross direction extends crossing with the reference direction.

According to the power transmission device of the present invention, the first shaft and the second shaft are not engaged without the connecting member having the shaft misalignment absorbing function. Hence, transmission of a rotational power between the input shaft and the output shaft is not possible without the connecting member. As a result, misassembling of the power transmission device is easily noticed. Therefore, the power transmission device of the embodiment is adaptable to, for example, a transmission that has large number of components and has a complicated structure, and further, that conventionally needs a high accuracy in assembling, i.e. a function of preventing misassembling and a function of shaft misalignment are necessary.

According to a further aspect of the present invention, each of the protruding portion and the recessed portion is formed to have a cross-sectional profile in a quadrilateral-shape.

According to a further aspect of the present invention, each of the protruding portion and the recessed portion is formed to have a cross-sectional profile in a square-shape or in a rectangular-shape.

Accordingly, an assembling angle between the input shaft and the output shaft is easily adjusted by forming the protruding portion or the recessed portion of the one of or both of the input shaft and the output shaft to have the cross-sectional profile(s) in a square-shape. The rectangle has four sides whose length are the same. Hence, one of or both of the input shaft and the output shaft is/are connected with the connecting member at four positions at every 90 degrees. As a result, the input shaft and the output shaft are easily connected to the connecting member.

According to a further aspect of the present invention, the protruding portion or the recessed portion of the first shaft and/or the second shaft is/are formed to have a cross-sectional profile in a square-shape.

Accordingly, in the case where the protruding portion or the recessed portion of the first shaft and/or the second shaft is/are formed to have the cross-sectional profile in the square, the first shaft connecting portion corresponding to the protruding portion or the recessed portion of first shaft or the second shaft connecting portion corresponding to the protruding portion or the recessed portion of the second shaft is/are formed in the rectangular-shape, thereby preventing a misassembling of the power transmission device, so that the power transmission device always has the shaft misalignment preventing function.

According to a further aspect of the present invention, the cross-sectional profile of the protruding portion or the recessed portion of each of the first shaft connecting portion and the second shaft connecting portion is/are formed in a rectangular-shape.

According to a further aspect of the present invention, the first shaft connecting portion and/or the second shaft connecting portion is/are formed to have the protruding portion having an outline in a rectangular-shape and formed with two cuboids each of which has a cross-sectional profile in a rectangular-shape.

Accordingly, as the cross-sectional profile(s) of the protruding portion(s) of the first shaft and/or the second shaft is/are formed in the square-shape(s) or the cross-sectional profile(s) of the recessed portion(s) of the first shaft and the second shaft is/are formed in square-shape(s), by forming the input shaft connecting portion corresponding to the first shaft and/or the output shaft connecting portion corresponding to the second shaft connecting portion in rectangular shape(s), a direction, where a clearance (first clearance or second clearance) is generated when the input shaft and the output shaft are connected, is not influenced by the first shaft and/or the second shaft, but rather, the direction where the clearance is generated is determined on the basis of a relative angle of the first shaft connecting portion and the second shaft connecting portion of the connecting member. Therefore, the direction where the first clearance (or a second clearance) is generated is not influenced by a relative angle between the input shaft and the output shaft, but rather, the direction where the first clearance is generated is fixed. That is to say, a reference direction (cross direction) determined on the basis of the direction, in which the first clearance (or the second clearance) is generated, is also not influenced by the relative angle between the input shaft and the output shaft, but rather, the reference direction (cross direction) is fixed. As a result, a relative angle between the reference direction and the cross direction is maintained to be constant, thereby achieving the shaft misalignment preventing function.

According to a further aspect of the present invention, in a case where one of the first shaft and the second shaft includes the protruding portion and the other one of the first shaft and the second shaft includes the recessed portion, the protruding portion is formed to have a shape whose outline does not correspond to an outline of the recessed portion.

Accordingly, by setting the reference direction perpendicular to the cross direction, the connecting member absorbs the shaft alignment in a broad area in a radial direction thereof.

According to a further aspect of the present invention, the reference direction extends perpendicular to the cross direction.

Accordingly, each of the protruding portion the first shaft and the recessed portion of the second shaft is formed to have the cross-sectional profile in the square-shape or the rectangular-shape. Therefore, each of the protruding portion of the first shaft and the recessed portion of the second shaft is easily formed by a cutting process or by a forging process. As a result, the power transmission device of the present invention is achieved with less processes of forming the protruding portion of the input shaft and the recessed portion of the output shaft and at lower manufacturing costs.

### BRIEF DESCRIPTION OF THE DRAWINGS

The foregoing and additional features and characteristics of the present invention will become more apparent from the following detailed description considered with the reference to the accompanying drawings, wherein:

Fig. 1 is a cross-sectional view of a power transmission device of a first embodiment;

Fig. 2 is a perspective view of an input shaft used for the power transmission device of the first embodiment;

Fig. 3 is a perspective view of an output shaft used for the power transmission device of the first embodiment;

Fig. 4 is a perspective view of a connecting member used for the power transmission device of the first embodiment when being viewed from a side of an input shaft connecting portion;

Fig. 5 is a perspective view of the connecting member used for the power transmission device of the first embodiment when being viewed from a side of an output shaft connecting portion;

Fig. 6A is a view of the connected input shaft and the connecting member, used for the power transmission device of the first embodiment, when being viewed from a side of the output shaft;

Fig. 6B is a view of the connected output shaft and the connecting member, used for the power transmission, device of the first embodiment, when being viewed from a side of the input shaft;

Fig. 7 is a perspective view of a connecting member used for the power transmission of a second embodiment when being viewed from a side of an output shaft connecting portion;

Fig. 8 is a cross-sectional view of a conventional power transmission device;

Fig. 9 is a perspective view of a connecting member used for the conventional power transmission device;

Fig. 10 is a perspective view of an input shaft and an output shaft used for the conventional power transmission device; and

Fig. 11 is a perspective view of the conventional power transmission device, in which the input shaft and the output shaft are connected via the connecting member, when being viewed from a radial direction thereof.

### DETAILED DESCRIPTION

Embodiments of a power transmission device will be described below in accordance with the attached drawings.

### [First embodiment]

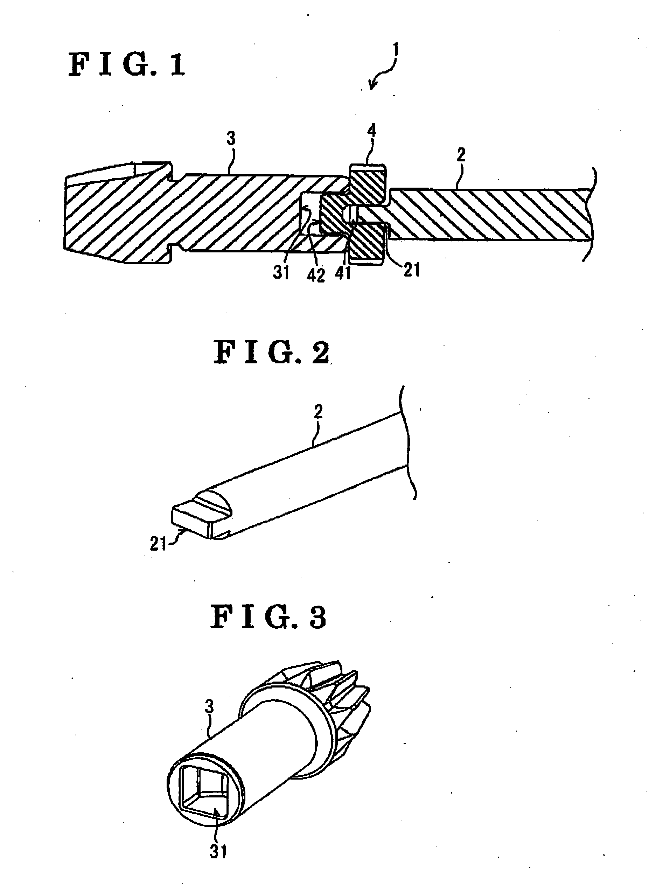

A power transmission device 1 of a first embodiment is adapted to, for example, a transmission apparatus having an input shaft and an output shaft. The power transmission device 1 of the first embodiment includes an input shaft 2 (first shaft), an output shaft 3 (second shaft), and a connecting member 4 provided between the input shaft 2 and the output shaft 3, as illustrated in Fig. 1.

As illustrated in Fig. 2, the input shaft 2 includes a protruding portion 21 (hereinafter referred to as an input shaft protruding portion 21) at one end portion thereof facing the output shaft 3. When the input shaft protruding portion 21 is viewed in an axial direction of the input shaft 2, a cross-sectional profile of the input shaft protruding portion 21 is formed in a quadrilateral shape, for example, in a rectangular shape so as to extend in a radial direction of the input shaft 2. The long sides of the rectangular-shaped cross-sectional profile of the input shaft protruding portion 21 approximately correspond to a diameter of the input shaft 2. The short sides of the rectangular-shaped cross-sectional profile of the input shaft protruding portion 21 are set to have predetermined length shorter than the long sides of the rectangular-shaped cross-sectional profile thereof.

As illustrated in Fig. 3, the output shaft 3 includes a recessed portion 31 (hereinafter referred to as an output shaft recessed portion 31) at one end portion thereof facing the input shaft 2. When the output shaft recessed portion 31 is viewed in an axial direction of the output shaft 3, a cross-sectional profile of the output shaft recessed portion 31 is formed in a square. Hence, the output shaft recessed portion 31 formed at one end portion of the output shaft 3 is formed so that the input shaft protruding portion 21 of the input shaft 2 is not insertable into the output shaft recessed portion 31.

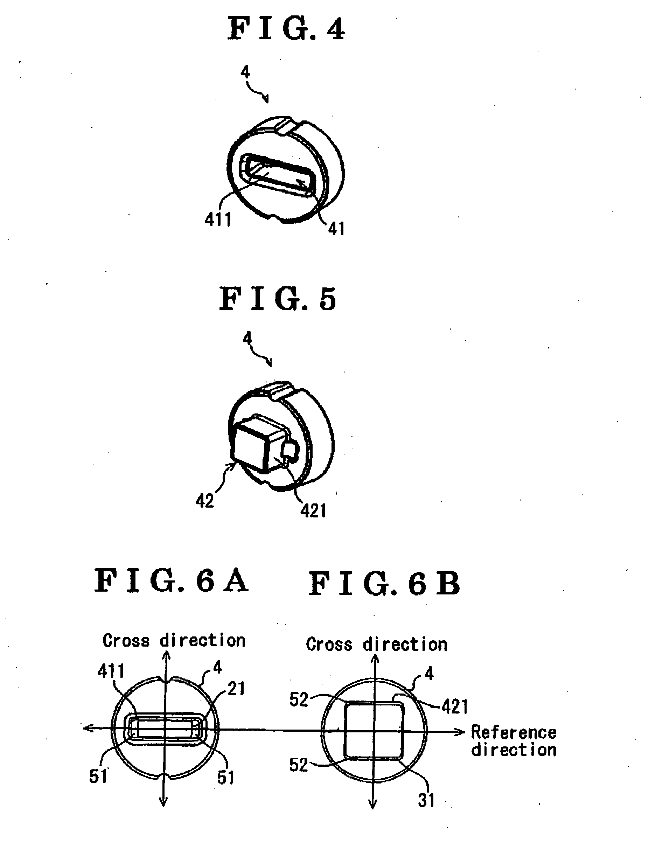

As illustrated in Figs. 4 and 5, an outer shape of the connecting member 4 is formed substantially in a cylindrical shape. Further the connecting member 4 includes an input shaft connecting portion 41, to which the one end portion of the input shaft 2 is connected, and an output shaft connecting portion 42, to which the one end portion of the output shaft 3 is connected.

The input shaft connecting portion 41 includes a recessed portion 411. When the connecting member 4 is viewed in an axial direction thereof from one side facing the input shaft 2, a cross-sectional profile of the recessed portion 411 is formed in a rectangular-shape so as to approximately correspond to the cross-sectional profile of the input shaft protruding portion 21 of the input shaft 2. Each of the long sides of the rectangular-shaped cross-sectional profile of the recessed portion 411 is set as a length corresponding to a sum of the length of each of the long sides of the input shaft protruding portion 21 and first clearances 51, as illustrated in Fig. 6A. Each of the short sides of the rectangular-shaped cross-sectional profile of the recessed portion 411 is set as a length substantially corresponding to a thickness (each of the short sides) of the input shaft protruding portion 21. Each of the first clearances 51 is set to have a size of clearance by which shaft misalignment is absorbed and allowed by the connecting member 4 in a reference direction. Depth of the input shaft connecting portion 41 in the axial direction of the connecting member 4 and a length of the input shaft protruding portion 21 in the axial direction of the input shaft 2 are set to have a depth and a length, respectively, by which rotational power is sufficiently transmitted when the input shaft 2 and the output shaft 3 are connected via the connecting member 4.

The output shaft connecting portion 42 includes a protruding portion 421 which protrudes towards the output shaft 3 and has a cross-sectional profile approximately corresponding to the cross-sectional profile of the output shaft recessed portion 31 provided at the output shaft 3. When the protruding portion 421 is viewed in the axial direction of the connecting member 4, the cross-sectional profile of the protruding portion 421 is formed in a rectangular shape that is formed substantially in a square. The long sides of the rectangular-shaped cross-sectional profile of the protruding portion 421 are set as length by which the protruding portion 421 of the connecting member 4 is fit into the output shaft recessed portion 31 without creating a clearance therebetween. Each of the short sides of the rectangular-shaped cross-sectional profile of the protruding portion 421 is set to have a length corresponding to a length obtained by subtracting second clearances 52 from one side of the output shaft recessed portion 31. As is the case with the clearances of the first clearances 51, each of the second clearances 52 is set to have a size of clearance by which the shaft misalignment is absorbed and allowed by the connecting member 4 in a cross direction. Depth of the output shaft recessed portion 31 in an axial direction of the output shaft 3 and a length of the protruding portion 421 of the output shaft connecting portion 42 in the axial direction of the connecting member 4 are set to have a depth and a length, respectively, by which the input shaft 2 and the output shaft 3 are securely connected.

The long sides, extending in the reference direction, of the rectangular-shaped cross-sectional profile of the recessed portion 411 formed at the input shaft connecting portion 41 extend perpendicular to the short sides, extending in the cross direction, of the rectangular-shaped cross-sectional profile of the protruding portion 421 formed at the output shaft connecting portion 42.

Connection of each element of the power transmission device 1 of the first embodiment will be described below.

The protruding portion 421 of the output shaft connecting portion 42 formed at the connecting member 4 is inserted into the output shaft recessed portion 31 formed at the one end portion of the output shaft 3 from one side thereof facing the input shaft 2 in the axial direction of the output shaft 3. The cross-sectional profile of the protruding portion 421 of the output shaft connecting member 42 is formed in the rectangular shape approximating to the square. As each of the long sides of the cross-sectional profile of the output shaft connecting member 421 formed in the rectangular-shape, approximating to the square-shape, corresponds to each side of the output shaft recessed portions 31, there are four relative angles at every 90 degrees at which the protruding portion 421 and the output shaft recessed portion 31 are connectable.

The input shaft 2 is connected to the connecting member 4 in a state where the output shaft 3 and the connecting member 4 are connected. The input shaft protruding portion 21 formed at the one end portion of the input shaft 2 is inserted into the recessed portion 411 of the output shaft connecting portion 41 formed at the connecting member 4. There are two relative angles at every 180 degrees at which the input shaft protruding portion 21 and the recessed portion 411 are connectable.

Fig. 6A illustrates a state where the input shaft 2 and the connecting member 4 are connected. Fig. 6B illustrates a state where the output shaft 3 and the connecting member 4 are connected. The first clearance 51 is formed between each end portion of the input shaft protruding portion 21 in the longitudinal direction thereof and each short side of recessed portion 411, in the reference direction. The second clearance 52 is formed between each long side of the protruding portion 421 of the output shaft connecting portion 42 and each corresponding side of the output shaft recessed portion 31, in the cross direction. That is to say, clearances (the first clearances 51 and the second clearances 52) are formed between the input shaft 2 and the connecting member 4, and between the output shaft 3 and the connecting member 4, both in the reference direction and in the cross direction. As the predetermined first clearances 51, formed between the input shaft 2 and the connecting member 4 in the reference direction, are formed perpendicular to the second clearances 52 formed between the output shaft 3 and the connecting member 4 in the cross direction, even if a relative position between the input shaft 2 and the output shaft 3 is misaligned in any directions of the radial directions of the connecting member 4, the shaft misalignment is absorbed by the connecting member 4. Further, there is little clearance between the input shaft protruding portion 21 of the input shaft 2 and the input shaft connecting portion 41 in the cross direction, and there is little clearance between the output shaft recessed portion 31 of the output shaft 3 and the output shaft connecting portion 42 in the reference direction. Hence, even when the connected input shaft 2 and the output shaft 3 are rotated, the input shaft 2 and the output shaft 3 do not clash against the connecting member 4, thereby generating less operating noise.

As the cross-sectional profile of the output shaft recessed portion 31 of the output shaft 3 is formed in the square-shape, the output shaft 3 and the connecting member 4 are connectable at four relative positions at every 90 degrees when the output shaft 3 and the connecting member 4 are connected, compared to a case where the output shaft recessed portion 31 is not formed in the square-shape, i.e. a case where the output shaft 3 and the connecting member 4 are connectable at two relative positions at every 180 degrees. Therefore, the relative angle between the output shaft 3 and the connecting member 4 when being assembled is easily adjusted.

According to the power transmission device 1 of the first embodiment, as each of the input shaft protruding portion 21 formed at the input shaft 2 and the output shaft recessed portion 31 formed at the output shaft 3 is formed to have a simple shape, each of the input shaft 2 and the output shaft 3 is processed to form each of the input shaft protruding portion 21 and the output shaft recessed portion 31 at lower costs. Further, transmission of the rotational power between the input shaft 2 and the output shaft 3 is impossible without the connecting member 4 having a shaft alignment absorbing function. Hence, if by any change the input shaft 2 and the output shaft 3 are assembled without the connecting member 4, misassembling of the power transmission device 1 is easily noticed. Specifically because the input shaft protruding portion 21 is formed to have the cross-sectional profile that does not correspond to the cross-sectional profile of the output shaft recessed portion 31, the input shaft 2 is prevented from being mistakenly inserted into the output shaft 3, i.e. the input shaft 2 and the output shaft 3 are prevented from being connected to each other without the connecting member 4. That is to say, because the power transmission device 1 of the first embodiment is not assembled without the connecting member 4 having the shaft misalignment absorbing function, the power transmission device 1 surely having both the shaft misalignment absorbing function and a misassembling prevention function is provided.

### [Second embodiment]

A power transmission device 10 of a second embodiment includes the input shaft 2 and the output shaft 3 each of which has the same structure as each of the input shaft 2 and the output shaft 3 of the first embodiment. As the second embodiment describes an example of a modified connecting member 4, detailed description of the same elements as the first embodiment is omitted and the same numerical references used in the second embodiment indicate the identical elements of the first embodiments.

As illustrated in Fig. 7, an outer shape of a connecting member 4' is formed substantially in a cylindrical shape and includes the input shaft connecting portion 41 having the recessed portion 411, to which one end portion of the input shaft 2 is connected, and an output shaft connecting portion 43 having a protruding portion 431 connected to one end portion of the output shaft 3. The input shaft connecting portion 41 of the second embodiment is formed to have the same shape as the input shaft connecting portion 41 of the first embodiment, hence, the detailed description of the input shaft connecting portion 41 is omitted.

The protruding portion 431 of the output shaft connecting portion 43 is formed with two cuboids (a first and second cuboids) arranged in parallel to each other. Therefore, when the protruding portion 431 is viewed from the axial direction of the connecting member 4', a cross-section of the protruding portion 431 has two rectangles (first rectangle and second rectangle) arranged in parallel to each other in a longitudinal direction thereof. An outline of the protruding portion 431 has the same shape as the cross-sectional profile of the protruding portion 421 of the first embodiment, that is to say, the outline of the protruding portion 431 is formed in a rectangular shape approximating to a square. The long sides of the first and second rectangles, arranged in parallel to each other at the protruding portion 431, correspond to the long sides of the rectangle-shaped outline of the protruding portion 431 of the output shaft connecting portion 43. Each of the short sides of the outline of the protruding portion 431 corresponds to a sum of a short side at one end of the first rectangle, a short side at one end of the second rectangle and a clearance therebetween.

The input shaft 2, the output shaft 3 and the connecting member 4' of the second embodiment are connected in the same manner as the input shaft 2, the output shaft 3 and the connecting member 4 of the first embodiment are connected. Specifically, the protruding portion 431 of the output shaft connecting portion 43 formed at one side of the connecting member 4' is inserted into the output shaft recessed portion 31, formed at the output shaft 3, from one side of the output shaft 3 facing the input shaft 2 in the axial direction of the output shaft 3. As the cross-sectional profile of the output shaft recessed portion 31 of the output shaft 3 is formed in the square, as is the case with the first embodiment, the output shaft connecting portion 43 and the output shaft recessed portion 31 are connectable in the four relative positions.

Then, the input shaft protruding portion 21 formed at the input shaft 2 is inserted into the input shaft connecting portion 41 from the other side of the connecting member 4' facing the input shaft 2 in the axial direction thereof, in the state where the output shaft connecting portion 43 is inserted into the output shaft recessed portion 31.

According to the power transmission device 10 of the second embodiment, the input shaft 2 and the output shaft 3 are connected in a state where the predetermined first clearances 51 are formed between the input shaft 2 and the connecting member 4' in the reference direction and the predetermined second clearances 52 are formed between the output shaft 3 and the connecting member 4' in the cross direction. Because of the first and second clearances 51 and 52, the connecting member 4' of the second embodiment absorbs the shaft misalignment, and further, the misassembling of the power transmission device 10 is prevented from occurring.

That is to say, the power transmission device 10 of the second embodiment includes the connecting member 4' having the output shaft connecting member 43 whose weight is lighter than the output shaft connecting portion 42 of the connecting member 4 described in the first embodiment, and further, the power transmission device 10 of the second embodiment achieves all the functions and advantages described in the first embodiment.

The present invention is not limited to the above-described embodiments. For example, the input shaft 2 may have the shape of the one end portion of the output shaft 3 described above, and the output shaft 3 may have the shape of the one end portion of the input shaft 2 described above. Alternatively, the input shaft 2 and the output shaft 3 may be formed to have protruding portions, respectively, or recessed portions, respectively. In a case where the input shaft 2 and the output shaft 3 are formed to have protruding portions, the connecting member 4 (4') may have only recessed portions at both sides thereof in the axial direction thereof so as to correspond to each shape of the protruding portions of the input shaft 2 and the output shaft 3. In a case where the input shaft 2 and the output shaft 3 are formed to have recessed portions, the connecting member 4 (4') may have only protruding portions at the both sides thereof in the axial direction thereof so as to correspond to each shape of the recessed portions of the input shaft 2 and the output shaft 3.

## Claims

1. A power transmission device (1) comprising:
a first shaft (2);
a second shaft (3); and
a connecting member (4) for connecting the shafts end-to-end and for transmitting rotational torque from one such shaft to the other; wherein:
the connecting member (4) has two faces of which one face has
a recessed portion (41) receiving, with a first clearance (51), a projecting portion (21) protruding axially from an end of the first shaft (2) or
a projecting portion received, with the first clearance (51), in a recess in an end portion of the first shaft (2)
and the other face has
a projecting portion (42) received, with a second clearance (52), in a recessed portion (22) formed in an axial end of the second shaft (3) or
a recessed portion receiving, with the second clearance (52), a projecting portion protruding axially from an end of the second shaft (3);
and the predetermined first clearance (51) being formed in a reference radial direction between the projecting portion (21) or recess of the first shaft (2) and the corresponding recessed portion (41) or projection of the connecting member (4);
and the predetermined second clearance (52) being formed in a cross radial direction between the projecting portion (42) or recess of the connecting member (4) and the corresponding recessed portion (31) or projecting portion of the second shaft (3);
the cross radial direction being one which intersects the reference radial direction.

2. The power transmission device (1) according to Claim 1, wherein the reference direction extends in parallel to one side of the second shaft connecting portion (42/43), and the cross direction extends crossing with the reference direction.

3. The power transmission device (1) according to Claim 1, wherein each of the protruding portions and the recessed portions is formed to have a cross-sectional profile in a quadrilateral-shape.

4. The power transmission device (1) according to Claim 2, wherein each of the protruding portions and the recessed portions is formed to have a cross-sectional profile in a square-shape or in a rectangular-shape.

5. The power transmission device (1) according to Claim 3 or Claim 4, wherein the protruding portion or the recessed portion of the first shaft (2) and/or the second shaft (3) is/are formed to have a cross-sectional profile in a square-shape.

6. The power transmission device (1) according to Claim 5, wherein the cross-sectional profile of the protruding portion (421/431) or the recessed portion (411) of each of the first shaft connecting portion (41) and the second shaft connecting portion (42/43) is/are formed in a rectangular-shape.

7. The power transmission device (1) according to any one of Claims 1 to 6, wherein the first shaft connecting portion (41) and/or the second shaft connecting portion (43) is/are formed to have the protruding portion having an outline in a rectangular-shape and formed with two cuboids each of which has a cross-sectional profile in a rectangular-shape.

8. The power transmission device (1) according to any one of Claims 1 to 7, wherein in a case where one of the first shaft (2) and the second shaft (3) includes the protruding portion and the other one of the first shaft (2) and the second shaft (3) includes the recessed portion, the protruding portion is formed to have a shape whose outline does not correspond to an outline of the recessed portion.

9. The power transmission device (1) according to any one of Claims 1 to 8, wherein the reference direction extends perpendicular to the cross direction.
